Europäisches Patentamt

European Patent Office

Office européen des brevets

(11) Veröffentlichungsnummer: **0 224 739**
**B1**

# EUROPÄISCHE PATENTSCHRIFT

(45) Veröffentlichungstag der Patentschrift:
22.08.90

(21) Anmeldenummer: 86115295.7

(22) Anmeldetag: 05.11.86

(51) Int. Cl.⁵: **B60Q 1/04**

(54) Scheinwerfer für Kraftfahrzeuge.

(30) Priorität: 04.12.85 DE 3542784

(43) Veröffentlichungstag der Anmeldung:
10.06.87 Patentblatt 87/24

(45) Bekanntmachung des Hinweises auf die Patenterteilung:
22.08.90 Patentblatt 90/34

(84) Benannte Vertragsstaaten:
AT ES FR GB IT

(56) Entgegenhaltungen:
DE-A- 2 752 049
DE-A- 3 426 712
GB-A- 2 068 501

(73) Patentinhaber: Hella KG Hueck & Co., Postfach 28 40,
D-4780 Lippstadt(DE)

(72) Erfinder: Urbschat, Ulrich, Tannhäuser Strasse 6,
D-4700 Hamm 4(DE)

## Beschreibung

Die Erfindung betrifft einen Scheinwerfer für Kraftfahrzeuge, bei dem

a) der Reflektor mit einem ringförmigen Traggestell durch zwei Schwenklager verbunden und durch eine Einstellvorrichtung um eine in Anbaulage des Scheinwerfers horizontale Schwenkachse schwenkbar ist;

b) ein in Lichtaustrittsrichtung weisender umlaufender Rand des Traggestells die Lichtscheibe aufnimmt;

c) ein zum Reflektor weisender Bereich des ringförmigen Traggestells und ein Bereich des Reflektors einander überlappend in einem Abstand gegenüberliegen und zwischen sich eine Ringdichtung einklemmen;

d) die Ringdichtung im zusammengebauten Zustand in einer durch die Schwenkachse verlaufenden Ebene liegt und im entspannten Zustand einen kreisrunden Querschnitt aufweist.

Bei einem aus der EP-A 0 129 922 bekannten Scheinwerfer (Fig. 2 und 3 der Zeichnung) weist die Mantelfläche eines zylinderförmigen Bereichs des Reflektors eine umlaufende Nut auf. In die Nut ist die Ringdichtung eingesetzt. Der Reflektor ist mit seinem zylinderförmigen Bereich in den zum Reflektor hin weisenden zylinderförmigen Bereich des Traggestells eingeschoben. Dabei ist die im entspannten Zustand einen kreisrunden Querschnitt aufweisende Ringdichtung zwischen dem zylinderförmigen Bereich des Traggestells und dem zylinderförmigen Bereich des Reflektors eingeklemmt. Durch Betätigen einer zwischen Traggestell und Reflektor eingesetzten Einstellvorrichtung ist der Reflektor um die in Anbaulage des Scheinwerfers horizontal verlaufende Schwenkachse verschwenkbar. Beim Verschwenken des Reflektors wird die Ringdichtung in ihrem elastischen Bereich entweder in ihrem oberen und unteren Abschnitt stark zusammengepreßt bzw. entlastet, da die Schwenkachse einen Abstand zu der senkrecht zur optischen Achse stehenden Ebene aufweist, in der die Ringdichtung verläuft. Dadurch ist nur eine relativ kleine Verstellung des Reflektors möglich, und bei einer zu kleinen Elastizität der Ringdichtung kann ein undichter Abschnitt zwischen Reflektor und Traggestell entstehen. Letzteres kann z.B. dann auftreten, wenn der Gummi gealtert ist oder die Ringdichtung durch häufiges Verschwenken des Reflektors einen hohen Abrieb aufweist. Ferner kann die Reibung zwischen der in einer Nut des Reflektors eingesetzten Ringdichtung beim Verschwenken des Reflektors so groß sein, daß der Reflektor nur schwergängig und ruckartig zu verschwenken ist.

Bei einem anderen in Fig. 11 der Zeichnung der EP-A 0 129 922 schematisch dargestellten Scheinwerfer ist die Kraft, die beim Verstellen des Reflektors notwendig ist, kleiner als bei dem vorstehend beschriebenen Scheinwerfer, da die Ringdichtung in einer Ebene liegt, in der die Schwenkachse verläuft. Die Ringdichtung ist fest mit dem Reflektorrand verbunden, so daß beim Verstellen des Reflektors wegen der an dem zylinderförmigen Bereich des Traggestells reibenden Ringdichtung der Reflektor relativ schwergängig und ruckartig verschwenkbar ist. Ferner kann durch häufiges Verstellen des Reflektors der Abrieb der Ringdichtung so groß sein, daß die Dichtigkeit zwischen Traggestell und Reflektor nicht mehr sicher ist.

Aufgabe der Erfindung ist es, den eingangs beschriebenen Scheinwerfer für Kraftfahrzeuge derart auszubilden, daß der Reflektor sich ohne großen Kraftaufwand leichtgängig und ruckfrei verschwenken läßt und eine gleichbleibende gute Abdichtung zwischen dem Reflektor und dem Traggestell gewährleistet ist. Hierbei soll sich die Ringdichtung so wenig wie möglich elastisch verformen und ihre Reibung so klein wie möglich sein. Außerdem soll die Ringdichtung nach dem teleskopartigen Ineinanderschieben der beiden zylinderförmigen Bereiche des Reflektors und des Traggestells etwa in einer Ebene liegen, in der die Schwenkachse verläuft.

Diese Aufgabe wird nach der Erfindung durch folgende Merkmale gelöst:

e) die einander zugewandten Flächen der beiden überlappenden Bereiche sind in einem vom jeweiligen Rand ausgehenden Abschnitt derart zylinderförmig ausgebildet, daß eine Rollbewegung der Ringdichtung sowohl beim Zusammenbau des Scheinwerfers als auch beim Verschwenken des Reflektors ermöglicht ist,

f) der innere Bereich weist in der Nähe seines Randes eine Erhöhung oder Vertiefung für die definierte Ausgangslage der Ringdichtung vor dem Zusammenbau auf;

g) der äußere Bereich weist eine Auflaufschräge oder -kante in einem Abstand von der Mittelachse der einen Schwenklagerhälfte auf, der gleich dem Abstand der Erhöhung oder Vertiefung von der Mittelachse der anderen Schwenklagerhälfte ist;

h) der umlaufende Spalt zwischen den einander zugewandten Flächen der beiden überlappenden Bereiche ist etwas kleiner als der Querschnittsdurchmesser der Ringdichtung;

i) die Endlage der Ringdichtung ist durch das Ineinandergreifen der beiden Schwenklagerhälften definiert.

Bei einer solchen Lösung liegt nach dem teleskopartigen Ineinanderschieben der beiden zylinderförmigen Bereiche des Reflektors und des Traggestells die Ringdichtung in einer Ebene, in der die Schwenkachse verläuft. Beim Verschwenken rollt die zwischen dem zylinderförmigen Bereich des Reflektors und dem zylinderförmigen Bereich des Traggestells eingeklemmte Ringdichtung, so daß sie wieder zusammengedrückt wird, noch eine große Reibung entsteht. Hierbei ist es weiterhin vorteilhaft, wenn die Ebene, in der die Ringdichtung verläuft, senkrecht zur optischen Achse steht.

Es ist vorteilhaft, eine Schwenklagerhälfte als Laschen auszubilden, die an dem inneren Bereich angeformt sind, wobei die Laschen im zusammengebauten Zustand unter Vorspannung an der Außenfläche des äußeren Bereichs anliegen. Hierbei ist es zweckmäßig, wenn die Laschen eine Öffnung aufweisen, in die Zapfen des äußeren Bereichs eingreifen und an ihren freien Enden auf der dem äußeren Bereich zugewandten Seite eine Auflaufschräge aufweisen. Dadurch greifen beim Aufschieben des äußeren Bereichs auf den inneren Bereich die Laschen selbstrastend in jeweils eine Verrastung ein.

In der Zeichnung ist ein Ausführungsbeispiel der Erfindung dargestellt; und zwar zeigt

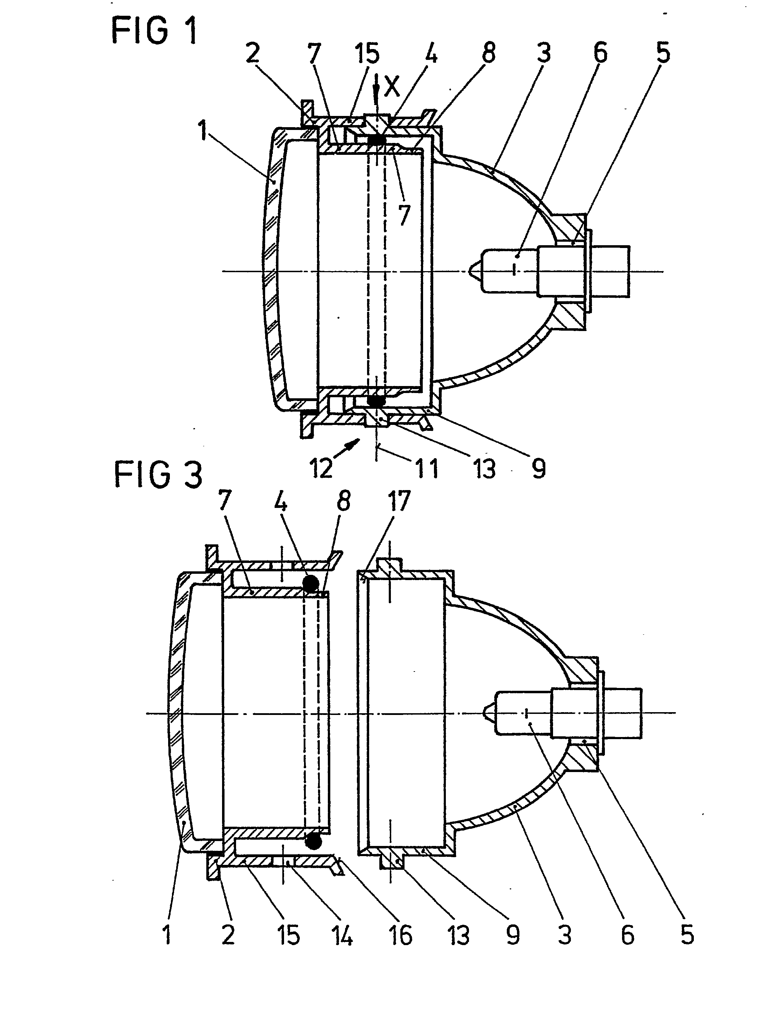

Figur 1 einen horizontalen mittleren Längsschnitt durch einen Scheinwerfer,

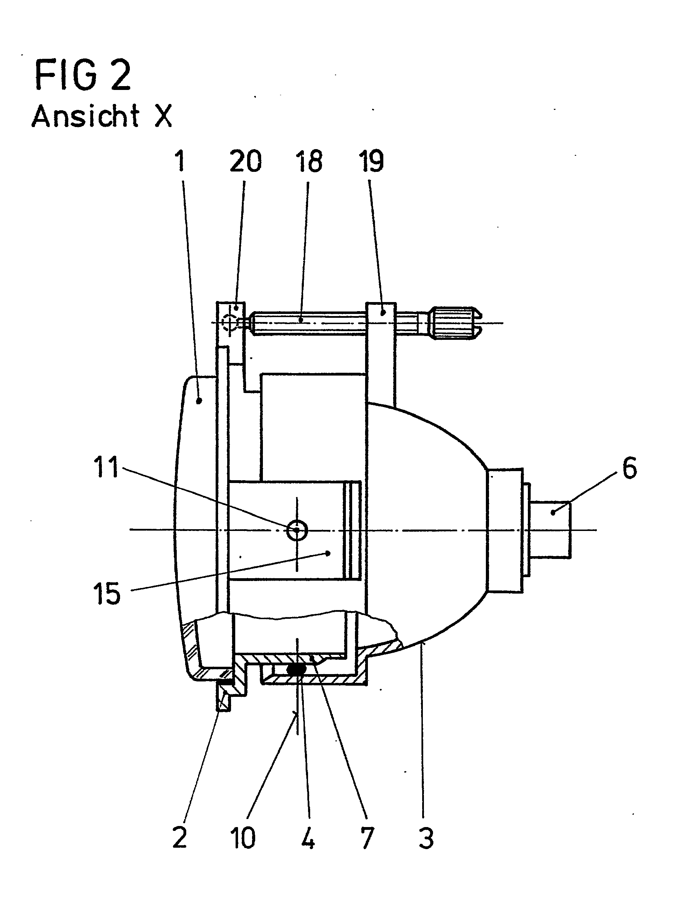

Figur 2 eine Ansicht aus Richtung X auf den Scheinwerfer und
Figur 3 den Scheinwerfer vor dem Zusammenbau.

Der in der Zeichnung dargestelllte Scheinwerfer besteht im wesentlichen aus einem die Lichtscheibe (1) aufnehmenden ringförmigen Traggestell (2), einem mit dem ringförmigen Traggestell (2) an zwei Lagerstellen gelenkig verbundenen Reflektor (3) und mit einer zwischen Traggestell und Reflektor eingeklemmten Ringdichtung (4). In die Scheitelöffnung (5) des Reflektors (3) ist die Glühlampe (6) eingesetzt.

Das ringförmige Traggestell (2) weist einen zylindrischen, zum Reflektor hin weisenden Bereich (7) auf. Der zylindrische Bereich (7) weist durch eine umlaufende Stufe, welche durch die Vertiefung (8) in der Mantelfläche gebildet wird, einen verjüngten Endabschnitt auf. Der Reflektor (3) ist mit seinem in Lichtaustrittsrichtung weisenden zylindrischen Bereich (9) auf den zylindrischen Bereich (7) des ringförmigen Traggestells (2) aufgeschoben. Die einander zugewandten Flächen der zylindrischen Bereiche (7 und 9) des ringförmigen Traggestells (2) und des Reflektors (3) verlaufen stetig und weisen einen äquidistanten Abstand zueinander auf. Zwischen die beiden zylindrischen Bereiche (7 und 9) ist die Ringdichtung (4) eingeklemmt. Die Ringdichtung verläuft in einer senkrecht zur optischen Achse stehenden Ebene (10). In der Ebene (10) liegt die in Anbaulage des Scheinwerfers horizontal verlaufende Schwenkachse (11) des Reflektors (3). Die Schwenklager (12) werden von einer Schwenklagerhälfte (13), die als ein an die Mantelfläche des zylindrischen Bereichs (9) des Reflektors (3) angeformter Zapfen und von einer Schwenklagerhälfte (14), die als Lasche (15) ausgeformt ist, gebildet. Die Lasche (15) liegt unter Vorspannung an dem inneren zylindrischen Bereich (9) an. Die Laschen (15) weisen an ihrem freien Ende je eine Auflaufschräge (16) auf, während der zylindrische Bereich (9) des Reflektors (3) an seinem Rand die Auflaufschräge (17) aufweist.

Die Figur 3 zeigt das die Lichtscheibe (1) aufnehmende ringförmige Traggestell (2) und den Reflektor (3) vor ihrem Zusammenfügen. Die Ringdichtung ist bis zur Stufe in der Mantelfläche des zylindrischen Bereichs (7) des Traggestells (2) unter Vorspannung aufgeschoben. Beim Aufschieben des zylindrischen Bereichs (9) des Reflektors (3) auf den zylindrischen Bereich (7) des ringförmigen Traggestells (2) wird die Ringdichtung (4) durch die Auflaufschräge (17) am Rand des Reflektors (3) zusammengepreßt und zwischen die zylindrischen Bereiche (7 und 9) eingerollt. Da die Stufe des zylindrischen Bereichs (7) und die Auflaufschräge des zylindrischen Bereichs (9) einen gleich großen Abstand zu der Ebene (10) aufweisen, verläuft die Ringdichtung (4) nach dem Aufschieben des Reflektors (3) in der Ebene (10). Beim Aufschieben des Reflektors auf das Traggestell und beim Auftreffen der Auflaufschrägen (16) der Laschen (15) auf die Zapfen federn die Laschen (15) radial nach außen. In der Endstellung greifen die Zapfen selbstrastend in die Öffnungen der Laschen ein. Durch Betätigen einer Einstellschraube (18), die in einen Ansatz (19) des Reflektors eingeschraubt ist und in einem Ansatz (20) des ringförmigen Gestells gelenkig gelagert ist, ist der Reflektor um die Schwenkachse (11) verstellbar.

**Patentansprüche**

1. Scheinwerfer für Kraftfahrzeuge, bei dem
   a) der Reflektor (3) mit einem ringförmigen Traggestell (2) durch zwei Schwenklager (12) verbunden und durch eine Einstellvorrichtung (18, 19, 20) um eine in Anbaulage des Scheinwerfers horizontale Schwenkachse (11) schwenkbar ist;
   b) ein in Lichtaustrittsrichtung weisender umlaufender Rand des Traggestells (2) die Lichtscheibe (1) aufnimmt;
   c) ein zum Reflektor (3) weisender Bereich (7) des ringförmigen Traggestells (2) und ein Bereich (9) des Reflektors (3) einander überlappend in einem Abstand gegenüberliegen und zwischen sich eine Ringdichtung (4) einklemmen;
   d) die Ringdichtung (4) im zusammengebauten Zustand in einer durch die Schwenkachse (11) verlaufenden Ebene (10) liegt und im entspannten Zustand einen kreisrunden Querschnitt aufweist;
gekennzeichnet durch die folgenden Merkmale:
   e) die einander zugewandten Flächen der beiden überlappenden Bereiche (7, 9) sind in einem vom jeweiligen Rand ausgehenden Abschnitt derart zylinderförmig ausgebildet, daß eine Rollbewegung der Ringdichtung (4) sowohl beim Zusammenbau des Scheinwerfers als auch beim Verschwenken des Reflektors (3) ermöglicht ist,
   f) der innere Bereich (7) weist in der Nähe seines Randes eine Erhöhung oder Vertiefung (8) für die definierte Ausgangslage der Ringdichtung (4) vor dem Zusammenbau auf;
   g) der äußere Bereich (9) weist eine Auflaufschräge (17) oder -kante in einem Abstand von der Mittelachse der einen Schwenklagerhälfte (13) auf, der gleich dem Abstand der Erhöhung oder Vertiefung (8) von der Mittelachse der anderen Schwenklagerhälfte (14) ist;
   h) der umlaufende Spalt zwischen den einander zugewandten Flächen der beiden überlappenden Bereiche (7, 9) ist etwas kleiner als der Querschnittsdurchmesser der Ringdichtung (4);
   i) die Endlage der Ringdichtung (4) ist durch das Ineinandergreifen der beiden Schwenklagerhälften (13, 14) definiert.

2. Scheinwerfer nach Anspruch 1, dadurch gekennzeichnet, daß die eine Schwenklagerhälfte (14) in an den inneren Bereich (7) angeformten federnden Laschen (15) ausgebildet ist.

3. Scheinwerfer nach Anspruch 2, dadurch gekennzeichnet, daß die Laschen (15) im zusammengebauten Zustand unter Vorspannung an der Außenfläche des äußeren Bereichs (9) anliegen.

4. Scheinwerfer nach Anspruch 2 oder 3, dadurch gekennzeichnet, daß die Laschen (15) jeweils eine Öffnung (14) aufweisen, in die Zapfen (13) des äußeren Bereichs (9) eingreifen.

5. Scheinwerfer nach einem der Ansprüche 2 bis 4, dadurch gekennzeichnet, daß die Laschen (15) an ihren freien Enden auf der dem äußeren Bereich (9) zugewandten Seite eine Auflaufschräge (16) aufweisen.

6. Scheinwerfer nach einem der Ansprüche 1 bis 5, dadurch gekennzeichnet, daß der zylinderförmige Bereich (9) des Reflektors (3) den zylinderförmigen Bereich (7) des Traggestells (2) übergreifend überlappt.

## Claims

1. Headlight for motor vehicles in which
a) the reflector (3) is connected to an annular support frame (2) by means of two swivel bearings (12) and can be swivelled by means of an adjustment device (18, 19, 20) around a swivel axis (11) which is horizontal in the installation position of the headlight;
b) a circumferential edge, pointing in the direction of the emergence of light, of the support frame (2) receives the light plate (1);
c) an area (7), pointing towards the reflector (3), of the annular support frame (2) and an area (9) of the reflector (3) lie opposite one another, overlapping one another, at a distance and clamp an annular seal (4) between them;
d) the annular seal (4) lies in the assembled state in a plane (10) running through the swivel axis (11) and in the non-tensioned state has a circular cross-section;
characterized by the following features:
e) the faces, facing one another, of the two overlapping areas (7, 9) are constructed, in a section starting from the respective edge, in a cylindrical manner such that a rolling movement of the annular seal (4) both when assembling the headlight and when swivelling the reflector (3) is made possible,
f) the inner area (7) has near to its edge a prominence or depression (8) for the defined initial position of the annular seal (4) before assembly;
g) the outer area (9) has a leading slope (17) or edge at a distance from the central axis of the one swivel bearing half (13), said distance being the same as the distance of the prominence or depression (8) from the central axis of the other swivel bearing half (14);
h) the circumferential gap between the faces, facing one another of the two overlapping areas (7, 9) is somewhat smaller than the cross-section diameter of the annular seal (4);

i) the final position of the annular seal (4) is defined by the neutral engagement of the two swivel bearing halves (13, 14).

2. Headlight according to Claim 1, characterized in that the one swivel bearing half (14) is constructed in resilient brackets (15) formed onto the inner area (7).

3. Headlight according to Claim 2, characterized in that the brackets (15) rest in the assembled state under pretension against the outer surface of the outer area (9).

4. Headlight according to Claim 2 or 3, characterized in that the brackets (15) have in each case one opening (14), into which spigots (13) of the outer area (9) engage.

5. Headlight according to one of Claims 2 to 4, characterized in that the brackets (15) have, at their free ends, a lead-in slope (16) on the side facing the outer area (9).

6. Headlight according to one of Claims 1 to 5, characterized in that the cylindrical area (9) of the reflector (3) overlaps in an engaging manner the cylindrical area (7) of the support frame (2).

## Revendications

1. Projecteur pour véhicules à moteurs,
a) où le réflecteur (3) est relié à un support annulaire (2) par deux paliers pivotants (12) et peut pivoter grâce à un dispositif de réglage (18, 19, 20) autour d'un axe de pivotement (11) horizontal dans la position de montage du projecteur;
b) où un collet circulaire du support annulaire (2) tourné vers la sortie de la lumière reçoit la lentille (1);
c) où une partie (7) du support annulaire (2) tournée vers le réflecteur (3) et une partie (9) du réflecteur (3) se font face à une certaine distance en se superposant et enserrent entre eux un joint annulaire (4);
d) où le joint annulaire (4), sur le projecteur assemblé, se situe dans un plan (10) passant par l'axe de pivotement (11) et présente à l'état détendu une section circulaire;
caractérisé en ce que
e) les surfaces appariées des deux parties superposées (7, 9) prennent une forme cylindrique à partir de leur bord respectif de manière à ce qu'un mouvement de roulement du joint annulaire (4) soit possible aussi bien lors du montage du projecteur que lors du réglage du réflecteur (3);
f) la partie intérieure (7) présente près de son bord une bosse ou un creux (8) afin de définir la position initiale du joint annulaire (4) avant l'assemblage;
g) la partie extérieure (9) présente un chanfrein (17) ou un bord à une distance de l'axe médian de la première moitié du palier de pivotement (13) qui correspond à la distance entre la bosse ou le creux (8) et l'axe médian de l'autre moitié du palier de pivotement (14);
h) l'entrefer entre les deux surfaces appariées des deux parties superposées (7, 9) est légèrement inférieur au diamètre de la section du joint annulaire (4);

i) la position finale du joint annulaire (4) est définie par l'interpénétration des deux moitiés de palier de pivotement (13, 14).

2. Projecteur selon la revendication 1, caractérisé en ce que l'une des moitiés de palier de pivotement (14) présente des colliers élastiques (15) formés sur la partie intérieure (7).

3. Projecteur selon la revendication 2, caractérisé en ce que, après assemblage, les colliers (15) s'appuient sur l'enveloppe de la partie extérieure par une précontrainte.

4. Projecteur selon la revendication 2 ou 3, caractérisé en ce que les colliers (15) présentent une ouverture (14) dans laquelle s'engagent les bossages (13) de la partie extérieure (9).

5. Projecteur selon l'une des revendications 2 à 4, caractérisé en ce que les colliers (15) présentent un chanfrein (16) à leur extrémité libre, du côté tourné vers la partie extérieure (9).

6. Projecteur selon l'une des revendications 1 à 5, caractérisé en ce que la partie cylindrique (9) du réflecteur (3) recouvre la partie cylindrique (7) du support annulaire (2).

FIG 1

FIG 3

# FIG 2
## Ansicht X